(19) Europäisches Patentamt / European Patent Office / Office européen des brevets

(11) **EP 2 068 138 B1**

(12) **EUROPÄISCHE PATENTSCHRIFT**

(45) Veröffentlichungstag und Bekanntmachung des Hinweises auf die Patenterteilung:
**18.07.2012 Patentblatt 2012/29**

(51) Int Cl.:
***G01K 17/06*** *(2006.01)*

(21) Anmeldenummer: **08015084.0**

(22) Anmeldetag: **27.08.2008**

(54) **Verfahren und Vorrichtung zur Erfassung der Wärmeabgabe einer Heizfläche**

Method and device for recording the heat given off by a heating surface

Procédé et dispositif de détermination de la délivrance de chaleur d'une surface de chauffage

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.12.2007 DE 102007059253**

(43) Veröffentlichungstag der Anmeldung:
**10.06.2009 Patentblatt 2009/24**

(73) Patentinhaber: **ista International GmbH**
**45131 Essen (DE)**

(72) Erfinder: **Mügge, Günter, Dr.**
**48159 Münster (DE)**

(74) Vertreter: **Cohausz Hannig Borkowski Wißgott**
**Patent- und Rechtsanwaltskanzlei**
**Schumannstrasse 97-99**
**40237 Düsseldorf (DE)**

(56) Entgegenhaltungen:
**DE-A1- 3 312 140     DE-A1- 3 521 188**
**DE-A1- 4 122 848     DE-A1-102005 061 107**

**EP 2 068 138 B1**

## Beschreibung

Die Erfindung betrifft ein Verfahren zur Bestimmung der Wärmeabgabe an einem Heizkörper, bei dem nur im Vorlauf oder nur im Rücklauf des Heizkörpers die Heizmedientemperatur und eine den Durchfluss des Heizmediums repräsentierende Größe erfasst wird. Die Erfindung betrifft auch eine Vorrichtung zur Bestimmung der Wärmeabgabe an einem Heizkörper, die in die Vorlauf- oder Rücklaufleitung eines Heizkörpers integrierbar ist und eine Sensorik aufweist zur Bestimmung einer den Durchfluss repräsentierenden Größe, sowie einen Temperatursensor zur Bestimmung der Temperatur des durchfließenden Heizmediums und eine Auswertungseinheit aufweist zur Berechnung der am zugeordneten Heizkörper abgegebenen Wärmemenge.

Eine solche Vorrichtung ist z.B. offenbart in den Veröffentlichungen DE 35 21 188 A1 und DE 10 2005 061 107 A1. Ein Verfahren und eine Vorrichtung zur Ermittlung der Wärmeabgabe ist auch offenbart in der Veröffentlichung DE 41 22 848 A1, wobei jedoch hier keine Durchflussmessung stattfindet. Gemäß der Veröffentlichung DE 33 12 140 A1 kann auch die Abkühlgeschwindigkeit bei unterbrochenem Durchfluss herangezogen werden.

Die Wärmeabgabe von Heizflächen z.B. zum Zwecke einer Heizkostenabrechnung wird üblicherweise mithilfe von so genannten Heizkostenverteilern ermittelt. Das Grundprinzip dieser Technik basiert auf der Abhängigkeit der Wärmeübergabe von der Heizkörperübertemperatur. Dazu wird an einer möglichst repräsentativen Stelle des Heizkörpers dessen Oberflächentemperatur und parallel dazu die Lufttemperatur erfasst. Unter Berücksichtigung des Heizkörperexponenten kann damit ein Maß für die Wärmeabgabe ermittelt werden.

Allerdings besteht keine strenge Proportionalität zwischen dem registrierten Verbrauch und der Heizwärmeabgabe, vielmehr besteht hier eine deutliche Abhängigkeit vom Betriebszustand, insbesondere vom Durchfluss durch den Heizkörper.

Ein weiterer Nachteil der bekannten Heizkostenverteiler ist, dass durch die Montage der Heizkostenverteiler auf dem Heizkörper eine Beeinträchtigung des Erscheinungsbildes, insbesondere bei modernen Design-Heizkörpern und auch eine bleibende Beschädigung der Heizkörperoberfläche verbunden ist.

Ein alternatives Prinzip für die Erfassung des Heizwärmeverbrauchs ist der Einsatz von Wärmezählern, bei denen eine Wärmebilanz durch Messung von Durchfluss und Temperaturdifferenz zwischen Vor- und Rücklauf ermöglicht wird. Ein sinnvoller Einsatz von Wärmezählern ist aber nur möglich, wenn die Heizflächen einer Wohnung bzw. eines Nutzungsbereiches von nur einem Heizkreis versorgt werden.

Die Ausstattung jeden Heizkörpers mit einem Wärmezähler wäre nicht nur mit hohen Kosten verbunden, sondern technisch sehr schwierig, da herkömmliche Wärmezähler nicht für entsprechend niedrige Durchflüsse konzipiert sind. Auch wäre die notwendige Installation der Vor- und Rücklauf-Temperaturfühler mit einem hohen Aufwand verbunden.

Neben diesen herkömmlichen Systemen ist versucht worden, die Verbrauchserfassung mit der Heizkörperregelung zu verbinden, indem in das Ventil ein miniaturisierter Wärmezähler integriert wird. Auch bei dieser Lösung ist eine Messung der Vor- und Rücklauftemperatur notwendig, sodass die oben genannten Nachteile nur teilweise vermieden werden.

Aufgabe der Erfindung ist es, eine Vorrichtung und ein Verfahren bereit zu stellen, mit dem die genannten Nachteile überwunden werden und mit denen auf einfache jedoch auch genaue Art und Weise der Wärmeverbrauch ermittelt werden kann.

Diese Aufgabe wird mit einem Verfahren gemäß Anspruch 1 gelöst, bei dem aus den eingangs genannten Größen sowie einer mittleren festen angenommenen oder konkret messtechnisch erfassten Raumtemperatur und einem vorgegebenen, zum Heizkörper gespeicherten Abkühlungsgrad des Heizmediums zwischen Vorlauf- und Rücklaufseite eine Wärmeabgabe rechnerisch ermittelt wird

Dabei können z.B. die zum Heizkörper gespeicherten Daten in einem Kennfeld gespeichert sein, insbesondere welches die Abhängigkeit der Wärmeleistung vom Durchfluß oder diesen repräsentierender Größe und der Raumlufttemperatur und entweder der Vorlauf- oder der Rücklauftemperatur darstellt. Auch können die zum Heizkörper gespeicherten Daten zumindest einen Abkühlungsgrad des Heizkörpers umfassen.

So kann dann bei der letztgenannten Ausführung nur im Vorlauf oder nur im Rücklauf des Heizkörpers die Heizmedientemperatur und eine den Durchfluss des Heizmediums repräsentierende Größe erfasst werden und aus diesen Größen sowie einem vorgegebenen Abkühlungsgrad des Heizmediums zwischen Vorlauf und Rücklaufseite und einer Raumtemperatur eine Wärmeabgabe rechnerisch ermittelt werden.

Allgemein wird mit Bezug auf alle möglichen Ausführungen unter einer den Durchfluss repräsentierenden Größe eine solche Größe verstanden, die entweder unmittelbar den Durchfluss angibt oder aus der zumindest ein Maß für den Durchfluss hergeleitet werden kann. Hierbei kann es sich auch um eine Hilfsgröße handelt, die nicht messtechnisch erfasst wird, sondern z.B. von einer Heizungssteuerung bzw. -regelung vorgegeben wird.

Wesentliches Merkmal der Erfindung ist es, dass für die Ermittlung der Wärmeleistung nicht wie bei Wärmezählem die Messwerte von Vor- und Rücklauf benutzt werden, sondern dass nur ein Messwert einer der beiden Temperaturen, bevorzugt der Vorlauftemperatur sowie eine Raumtemperatur benötigt wird, wobei letztere als eine angenommene Raumtemperatur vorliegen kann, z.B. eine angenommene mittlere Raumtemperatur von z.B. 20 °C oder in bevorzugter Ausführung auch als eine konkret gemessene Raumtemperatur.

Die Aufgabe wird somit auch gelöst durch eine Vorrichtung gemäβ Anspruch A2 der eingangs genannten Art, insbesondere zur Durchführung des Verfahrens gemäβ Anspruch 1, bei der mittels der Auswerteeinheit die Wärmemenge anhand von zumindest der den Durchfluss repräsentierenden Größe, einer gemessenen Heizmedientemperatur sowie einem vorgegebenen Abkühlungsgrad des Heizmediums zwischen Vorlauf und Rücklaufseite und einer angenommenen oder gemessenen Raumtemperatur berechenbar ist.

Besonders bevorzugt ist dabei die Vorrichtung als ein Stellventil ausgebildet, welches einem Heizkörper zugeordnet wird. Ein solches Stellventil kann ein Thermostatventil ohne Hilfsenergie oder auch ein gesteuertes / geregeltes Ventil mit Antrieb sein.

Bei Integration der Sensorik z.B. im Vorlaufanschluss des Heizkörpers kann dort eine den Durchfluss repräsentierende Größe oder auch eine Hilfsgröße bestimmt und die Vorlauftemperatur gemessen werden.

Im einfachsten Fall wird aus der Vorlauftemperatur, dem Durchfluss ggfs. der Hilfsgröße, einer angenommenen Raumtemperatur (z.B. 20°C) und den gespeicherten Heizkörperdaten, in einer möglichen Ausführung einem angenommenen Abkühlungsgrad im Heizkörper, ein Verbrauchswert (im Sinne eines Verteilmaßstabes) bestimmt.

Geeignet wäre z.B. folgende Rechenvorschrift:

**Rechnerischer Energieverbrauch = spez. Wärmekapazität x Massedurchfluss x Abkühlungsgrad x (Vorlauftemperatur – angenommene bzw. gemessene Raumtemperatur )**

Der Abkühlungsgrad kann im einfachsten Fall fest vorgegeben sein, z.B. entsprechend dem Wert bei Auslegungsbedingungen, typischerweise

$$\Phi = \frac{\vartheta_{V0} - \vartheta_{R0}}{\vartheta_{V0} - \vartheta_{L0}} = \frac{70 - 55}{70 - 20} = 0,3$$

Dabei bezeichnet $\vartheta_{V0}$ die Vorlauftemperatur, $\vartheta_{R0}$ die Rücklauftemperatur und $\vartheta_{L0}$ die Raumtemperatur (jeweils Auslegungswerte).

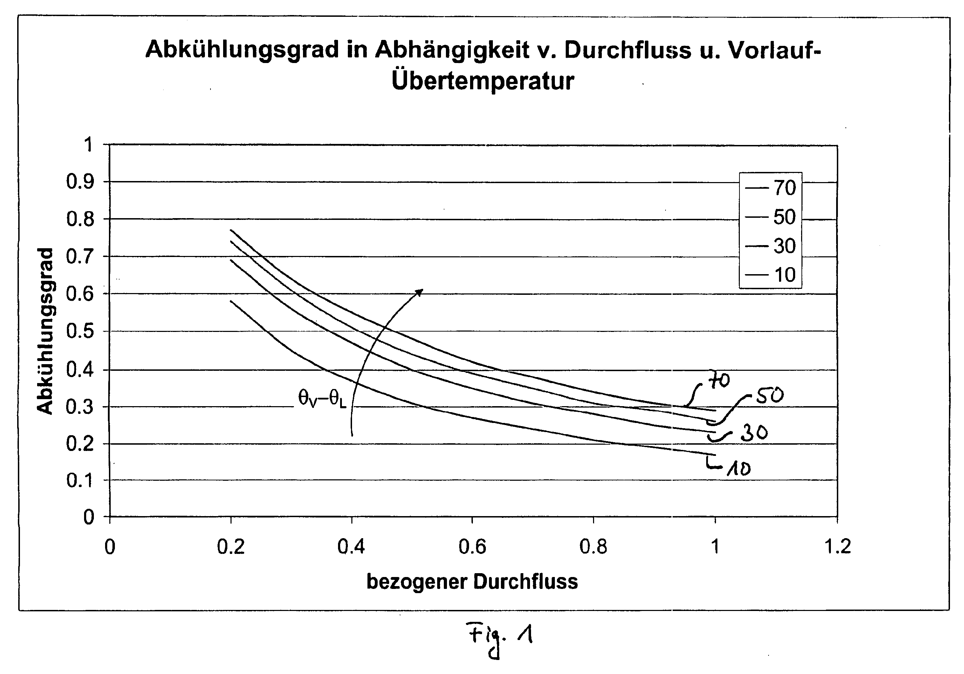

Der Abkühlungsgrad ist allgemein abhängig vom Durchfluss durch den Heizkörper und von den Wärmeübergangsbedingungen, die ihrerseits von der Übertemperatur des Heizkörpers abhängen, und durch die Differenz zwischen Vorlauftemperatur und Raumtemperatur gekennzeichnet werden können. Diese Abhängigkeit kann z.B. rechnerisch oder experimentell für typische Heizkörper ermittelt werden. Qualitativ ergibt sich der in Fig 1. gezeigte Zusammenhang.

Vorzugsweise wird deshalb nicht mit einem festen Abkühlungsgrad gerechnet, sondern diese in Fig.1 dargestellte Abhängigkeit z.B. in einer Tabelle oder einem Kennfeld, beispielsweise in der Auswerteeinheit hinterlegt. Dieses Kennfeld kann allgemeingültig für durchschnittliche Heizkörper gegeben sein. Es kann aber auch vorzugsweise für den tatsächlich installierten speziellen Heizkörpertyp ein spezielles Kennfeld bei der Inbetriebnahme der Auswerteeinheit in diese einprogrammiert werden.

Eine solche Rechenvorschrift kann in einer Auswerteeinheit gespeichert und durchgeführt werden, die z.B. auch in der erfindungsgemäßen Vorrichtung, ggfs. zusammen mit einer Anzeigeeinheit integriert sein kann.

Der Abkühlungsgrad kann in einer Ausführung fest z.B. in der Auswerteeinheit vorgegeben sein oder er kann für stationäre Verhältnisse bei einer gegebenen Heizkörper-Wärmeleistung, z.B. der Heizkörper - Normleistung aus Durchfluss des Heizmediums, Vorlauf- oder Rücklauf- und Raumtemperatur ermittelt werden.

Vorzugsweise wird deshalb auch die Raumlufttemperatur messtechnisch erfasst. Damit lässt sich die Rücklauftemperatur oder umgekehrt die Vorlauftemperatur als Funktion der vorgenannten Größen darstellen und so anhand der Vorlauftemperatur, der berechneten Rücklauftemperatur oder der Rücklauftemperatur und der berechneten Vorlauftemperatur und der den Durchfluss repräsentierenden Größe, die gemessen oder durch eine übergeordnete Steuerung / Regelung vorgegeben sein kann, die Wärmeleistung berechnen.

In einer weiteren Ausführung kann eine Abhängigkeit der momentanen Heizkörper-Wärmeleistung des Heizkörpers von der Vorlauftemperatur und vom Durchfluss berücksichtigt werden, z.B. in einer Auswerteeinheit der Vorrichtung, die in der Vorrichtung integriert sein kann, wobei diese Abhängigkeit z.B. als Tabelle oder Kennfeld hinterlegt sein kann, um anhand dieser Größen die momentane Heizkörper-Wärmeleistung auszulesen.

Der Durchfluss selbst ist grundsätzlich mit einem bekannten Verfahren messbar.

Da eine direkte Integration z.B. eines Flügelradzählers in den Ventilkörper einer als Stellventil ausgebildeten erfindungsgemäßen Vorrichtung jedoch aufgrund der begrenzten Platzverhältnisse schwierig ist, kann es in einer vorteilhaften Weiterbildung vorgesehen sein, ohnehin vorhandene Bauelemente für die Durchflussmessung zu verwenden.

So kann die Vorrichtung z.B. eine Druckmessvorrichtung, insbesondere eine Stau- oder Differenzdruckmessvorrichtung umfassen zur Bestimmung einer den Durchfluss repräsentierenden Größe, wobei diese z.B. in den Ventilteller integriert sein kann. Staudruck oder Differenzdruck sind geeignete Größen, da diese vom Durchfluss abhängige Größen darstellen.

Z.B. ist die angeströmte Fläche des Ventiltellers mit dem Gesamtdruck beaufschlagt, während auf der Rückseite des Ventiltellers ein um den dynamischen Anteil verminderter Druck herrscht. Vorzugsweise lässt sich eine Sensorik als insbesondere miniaturisierte Druckmessdose in den Ventilteller integrieren. Beispielsweise können zur Aufnahme der Druckdifferenz sich im Ventilteller Öffnungen befinden, vorzugsweise als zentrale Bohrung auf der angeströmten Seite des Ventiltellers und als Ringspalt auf der gegenüberliegenden Seite.

Die Druckdifferenz wirkt auf eine im Ventilteller integrierte Messmembran, die z.B. als dünne Siliziummembran ausgebildet sein kann. Die Auslenkung der Membran verändert die Halbleitereigenschaften und kann damit durch Abgriff eines elektrischen Signals von dieser Membran erfasst werden.

In einer anderen Ausführungsform kann die Abhängigkeit des Wärmeübergangs von der Strömungsgeschwindigkeit ausgenutzt werden. So kann z.B. die den Durchfluss repräsentierende Größe als Temperaturgefälle innerhalb des Stellventils, insbesondere zwischen zwei ausgewählten Orten im/am Stellventil mittels Temperaturfühlern gemessen wird.

Dem liegt zugrunde, dass sich im Strömungskanal des Ventils Heizungswasser befindet z.B. mit der aktuellen Vorlauftemperatur, während an der Außenseite des Ventils Raumtemperatur herrscht. In der Außenwand des Ventilkörpers, aber auch im Ventilstößel liegt somit ein Temperaturgefälle und entsprechend auch ein Wärmestrom vor. Aufgrund der genannten Abhängigkeit wirkt sich der aktuelle Durchfluss auch auf diesen Wärmestrom und das Temperaturgefälle aus. Durch Messung der Temperaturunterschiede in der Vorrichtung, z.B. entlang der Längsachse des Ventilstößels kann somit ein Maß für den Durchfluss gewonnen werden.

Zur Reduktion des messtechnischen Aufwands wird weiterhin in einer Ausführung vorgeschlagen, zur Ermittlung des Verbrauchswertes eine Hilfsgröße für den Durchfluss zu verwenden. Diese kann z.B. der Ventilhub sein. Bei gegebenem Differenzdruck am Ventil ist der Durchfluss eine eindeutige Funktion des Ventilhubs. Die vergleichsweise aufwändige Volumenstrommessung kann somit durch eine Längenmessung ersetzt werden. Der Ventilhub selbst ist bei typischen Thermostatventilen eine Funktion der Regelabweichung (P-Regel-Verhalten). Die direkte Messung des Ventilhubs kann also auch durch Bestimmung der Sollwerteinstellung, z.B. durch Abgriff des Einstellwinkels mithilfe eines Potentiometers und Messung der Raumtemperatur, vorzugsweise am Ort der Vorrichtung erfolgen.

Ausführungsbeispiele bzw. Details der Erfindung sind in den Figuren dargestellt. Es zeigen:

Figur 1: Die Abhängigkeit des Abkühlungsgrads von der Vorlauftemperatur und dem Durchfluss.

Figur 2: eine in ein Stellventil integrierte Sensorik zu Bestimmung des Durchflusses.

Figur 3: Die Anordnung nach Figur 2 im dazu senkrechten Schnitt

Die Figur 1 zeigt die grafische Darstellung der Abhängigkeit des Abkühlungsgrads von der Differenz der Vorlauftemperatur und der Raumlufttemperatur und dem Durchfluss für 4 verschiedene Temperaturen. Diese Abhängigkeit kann in einer bevorzugten Ausführung des Verfahren oder der Vorrichtung ais eine Tabelle oder ein Kennfeld gespeichert sein, z.B. in der Vorrichtung oder einer übergeordneten Steuerung / Regelung. Wie eingangs erwähnt kann durch Berücksichtigung dieser Abhängigkeit die Genauigkeit des Verfahrens erhöht werden.

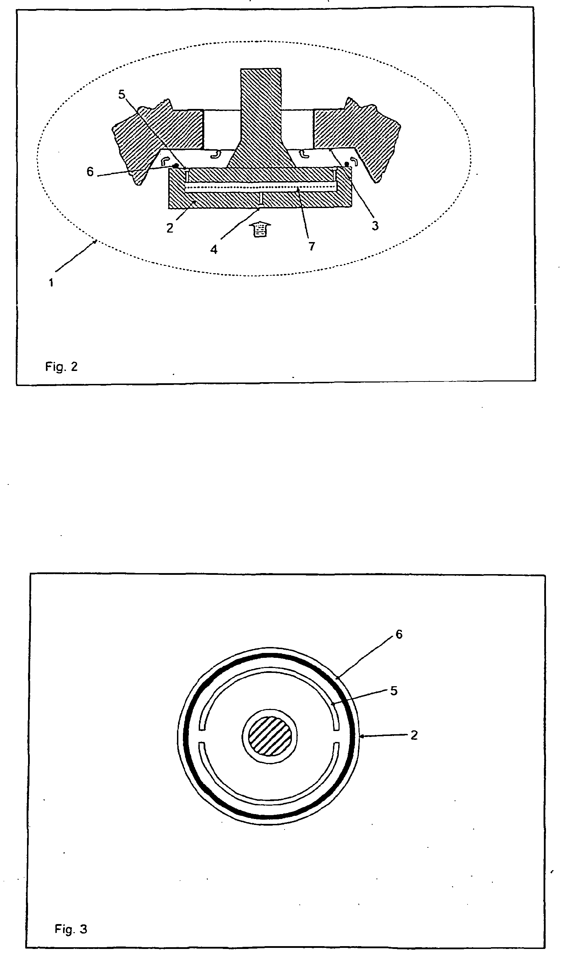

Die Figuren 2 und 3 zeigt eine Möglichkeit eine erfindungsgemäße Vorrichtung mittels eines Stellventils auszubilden. Erkennbar ist hier als Ausschnitt aus einem Ventilkörper der Ventilsitz sowie der Ventilteller 2, dessen Stellung gegenüber dem Ventilsitz Einfluss hat auf die Durchflussmenge des Heizkörpermediums und somit auch auf den Differenzdruck bzw. den Staudruck, der hier messtechnisch erfasst werden soll.

Hier weist der Ventilteller 2 einen inneren Raum auf, der von einer Membran 5 durchspannt ist. Der anströmseitig vor der Membran 5 liegende Teil des Raums ist durch eine zentrale Bohrung 4 mit dem anströmseitigen Inneren des Ventilkörpers verbunden. Der abströmseitige Teil des Raums ist durch wenigstens einen Ringspalt 5 mit dem abströmseitigen Inneren des Ventilkörpers verbunden, so dass sich beim Umströmen des Ventiltellers durch das Heizkörpermedium ein Differenzdruck aufbaut, der die Membran auslenkt. Diese Auslenkung kann messtechnisch erfasst werden und dem Verfahren als Messwert zugrunde gelegt werden, welcher den Durchfluss repräsentiert.

Bezüglich sämtlicher Ausführungen ist festzustellen, dass die in Verbindung mit einer Ausführung genannten technischen Merkmale nicht nur bei der spezifischen Ausführung eingesetzt werden können, sondern auch bei den jeweils anderen Ausführungen.

**Patentansprüche**

1. Verfahren zur Bestimmung der Wärmeabgabe an einem Heizkörper, bei dem nur im Vorlauf oder nur im Rücklauf des Heizkörpers die Heizmedientemperatur und eine den Durchfluss des Heizmediums repräsentierende Größe erfasst wird, wobei aus diesen Größen sowie einer mittleren festen angenommenen oder konkret messtechnisch erfassten Raumtemperatur und einem vorgegebenen, zum Heizkörper gespeicherten Abkühlungsgrad des Heizmediums zwischen Vorlauf- und Rücklaufseite eine Wärmeabgabe rechnerisch ermittelt wird.

2. Verfahren nach Anspruch 1, **dadurch gekennzeichnet, dass** der Abkühlungsgrad unveränderlich fest vorgegeben ist entsprechend den Auslegungsbedingungen des Heizkörpers.

3. Verfahren nach Anspruch 1, **dadurch gekennzeichnet, dass** der Abkühlungsgrad ermittelt wird aus der den Durchfluss repräsentierenden Größe und einer Wärmeübergangsbedingung.

4. Verfahren nach einem der vorherigen Ansprüche 1 oder 3, **dadurch gekennzeichnet, dass** zur Ermittlung der Wärmeabgabe eine Abhängigkeit des Abkühlungsgrades zumindest von der Vorlauftemperatur und vom Durchfluss oder der den Durchfluss repräsentierenden Größe gespeichert ist.

5. Verfahren nach einem der vorherigen Ansprüche, **dadurch gekennzeichnet, dass** die den Durchfluss repräsentierende Größe und die Heizmedientemperatur gemessen wird in einem Stellventil, welches einem Heizkörper zugeordnet ist.

6. Verfahren nach Anspruch 5, **dadurch gekennzeichnet, dass** die den Durchfluss repräsentierende Größe als Differenzdruck innerhalb des Stellventils gemessen wird.

7. Verfahren nach Anspruch 5, **dadurch gekennzeichnet, dass** die den Durchfluss repräsentierende Größe als Temperaturgefälle innerhalb des Stellventils mittels Temperaturfühlern gemessen wird.

8. Verfahren nach Anspruch 7, **dadurch gekennzeichnet, dass** das Temperaturgefälle gemessen wird entlang der Längsachse des Ventilstößels oder in der Außenwand des Stellventils

9. Verfahren nach einem der vorherigen Ansprüche, **dadurch gekennzeichnet, dass** die den Durchfluss repräsentierende Größe durch den Ventilhub eines dem Heizkörper zugeordneten Stellventils gegeben ist, der entweder gemessen oder durch eine übergeordnete Steuerung /Regelung vorgegeben ist.

10. Verfahren nach Anspruch 9, **dadurch gekennzeichnet, dass** der Ventilhub gemessen wird als Widerstand eines Potentiometers, dessen Widerstand vom Ventilhub abhängt.

11. Verfahren nach Anspruch 9 **dadurch gekennzeichnet, dass** der Ventilhub ermittelt wird aus der gemessenen Raum-Ist-Temperatur und dem am Ventil eingestellten Raumtemperatursollwert.

12. Vorrichtung zur Bestimmung der Wärmeabgabe an einem Heizkörper, die in die Vorlauf- oder Rücklaufleitung eines Heizkörpers integrierbar ist und eine Sensorik aufweist zur Bestimmung einer den Durchfluss repräsentierenden Größe, sowie einen Temperatursensor zur Bestimmung der Temperatur des durchfließenden Heizmediums und eine Auswertungseinheit aufweist zur Berechnung der am zugeordneten Heizkörper abgegebenen Wärmemenge, **dadurch gekennzeichnet, dass** mittels der Auswerteeinheit die Wärmemenge anhand von zumindest der den Durchfluss repräsentierenden Größe, einer gemessenen Heizmedientemperatur sowie einem vorgegebenen Abkühlungsgrad des Heizmediums zwischen Vorlauf und Rücklaufseite und einer angenommenen oder gemessenen Raumtemperatur berechenbar ist.

13. Vorrichtung nach Anspruch 12, **dadurch gekennzeichnet, dass** sie als Stellventil (1) ausgebildet ist.

14. Vorrichtung nach einem der vorherigen Ansprüche 12 oder 13 **dadurch gekennzeichnet, dass** sie eine Druckmessvorrichtung (4,5,7,), insbesondere eine Stau- oder Differenzdruckmessvorrichtung umfasst zur Bestimmung einer den Duchfluss repräsentierenden Größe.

15. Vorrichtung nach Anspruch 14, **dadurch gekennzeichnet, dass** die Druckmessvorrichtung in den Ventilteller (2) integriert ist.

**16.** Vorrichtung nach einem der vorherigen Ansprüche 12 bis 15, **dadurch gekennzeichnet, dass** sie eine Temperaturmessvorrichtung mit mindestens zwei Temperatursensoren umfasst zur Bestimmung einer den Durchfluss repräsentierenden Größe, wobei mittels den Temperatursensoren ein Temperaturgefälle zwischen mindestens zwei Messorten erfassbar ist, insbesondere entlang der Längsachse des Ventilstößels oder innerhalb einer Außenwandung des Ventilkörpers / der Vorrichtung.

**17.** Vorrichtung nach einem der vorherigen Ansprüche 12 bis 16, **dadurch gekennzeichnet, dass** sie eine Messvorrichtung umfasst zur Bestimmung des Ventilhubes als den Durchfluss repräsentierende Größe.

**18.** Vorrichtung nach einem der vorherigen Ansprüche 12 bis 17, **dadurch gekennzeichnet, dass** der Sensorik zu Bestimmung einer den Durchfluss repräsentierende Größe ein Stellwert für den Ventilhub als den Durchfluss repräsentierende Größe von einer übergeordneten Heizungssteuerung vorgebbar ist.

**Claims**

**1.** Method for determining the heat given off by a heating body, in which the heating media temperature and a magnitude representing the through flow of the heating medium are recorded only in the forward flow or only in the return flow of the heating body, heat given off being determined arithmetically from these variables and from an average fixed assumed or actual measurement-recorded room temperature and a stipulated degree of cooling, stored with respect to the heating body, of the heating medium between the forward flow side and the return flow side.

**2.** Method according to Claim 1, **characterized in that** the degree of cooling is permanently stipulated invariably according to the design conditions of the heating body.

**3.** Method according to Claim 1, **characterized in that** the degree of cooling is determined from the variable representing the through flow and from a heat transfer condition.

**4.** Method according to either one of the preceding Claims 1 and 3, **characterized in that**, to determine the heat given off, a dependence of the degree of cooling at least upon the forward flow temperature or upon the through flow or upon the variable representing the through flow is stored.

**5.** Method according to one of the preceding claims, **characterized in that** the variable representing the through flow and the heating media temperature are measured in a regulating valve which is assigned to a heating body.

**6.** Method according to Claim 5, **characterized in that** the variable representing the through flow is measured as a differential pressure within the regulating valve.

**7.** Method according to Claim 5, **characterized in that** the variable representing the through flow is measured as a temperature gradient within the regulating valve by means of temperature sensors.

**8.** Method according to Claim 7, **characterized in that** the temperature gradient is measured along the longitudinal axis of the valve tappet or in the outer wall of the regulating valve.

**9.** Method according to one of the preceding claims, **characterized in that** the variable representing the through flow is given by the valve stroke of a regulating valve assigned to the heating body, the said valve stoke either being measured or being stipulated by an overriding control/regulation.

**10.** Method according to Claim 9, **characterized in that** the valve stroke is measured as the resistance of a potentiometer, the resistance of which is dependent upon the valve stroke.

**11.** Method according to Claim 9, **characterized in that** the valve stroke is determined from the measured room actual temperature and from the room temperature desired value set on the valve.

**12.** Device for determining the heat given off by a heating body, which device can be integrated into the forward flow line or return flow line of a heating body and has a sensor arrangement for determining a variable representing the through flow and a temperature sensor for determining the temperature of the heating medium flowing through and has an evaluation unit for calculating the heat quantity given off by the assigned heating body, **characterized in**

**that** the heat quantity can be calculated by means of the evaluation unit on the basis of at least the variable representing the through flow, of a measured heating media temperature and of a stipulated degree of cooling of the heating medium between the forward flow side and return flow side and of an assumed or measured room temperature.

13. Device according to Claim 12, **characterized in that** it is designed as a regulating valve (1).

14. Device according to either one of the preceding Claims 12 and 13, **characterized in that** it comprises a pressure-measuring device (4, 5, 7) in particular a dynamic-pressure or differential-pressure measuring device, for determining a variable representing the through flow.

15. Device according to Claim 14, **characterized in that** the pressure-measuring device is integrated into the valve disc (2).

16. Device according to one of the preceding Claims 12 to 15, **characterized in that** it comprises a temperature-measuring device with at least two temperature sensors for determining a variable representing the through flow, a temperature gradient between at least two measurement locations being recordable by means of the temperature sensors, in particular along the longitudinal axis of the valve tappet or within an outer wall of the valve body/device.

17. Device according to one of the preceding Claims 12 to 16, **characterized in that** it comprises a measuring device for determining the valve stroke as a variable representing the through flow.

18. Device according to one of the preceding Claims 12 to 17, **characterized in that** a manipulated value for the valve stroke, as a variable representing the through flow, can be stipulated by an overriding heating control for the sensor arrangement for determining a variable representing the through flow.


**Revendications**

1. Procédé de détermination de la délivrance de chaleur à un corps chauffant, dans lequel on détecte la température du fluide de chauffage et une grandeur représentant le débit du fluide de chauffage uniquement dans la conduite d'arrivée ou uniquement dans la conduite de retour du corps chauffant, dans lequel on détermine une délivrance de chaleur par le calcul à partir de ces grandeurs ainsi que d'une température ambiante moyenne fixe admise ou déterminée concrètement par une technique de mesure et d'un degré de refroidissement prédéterminé mémorisé, au corps chauffant, du fluide de chauffage entre le côté d'arrivée et le côté de retour.

2. Procédé selon la revendication 1, **caractérisé en ce que** le degré de refroidissement est prédéterminé de façon invariablement fixe conformément aux conditions de conception du corps chauffant.

3. Procédé selon la revendication 1, **caractérisé en ce que** l'on détermine le degré de refroidissement à partir de la grandeur représentant le débit et d'une condition de transfert de chaleur.

4. Procédé selon l'une quelconque des revendications précédentes 1 ou 3, **caractérisé en ce que**, pour la détermination de la délivrance de chaleur, on mémorise une relation de dépendance du degré de refroidissement au moins de la température d'amont et du débit ou de la grandeur représentant le débit.

5. Procédé selon l'une quelconque des revendications précédentes, **caractérisé en ce que** l'on mesure la grandeur représentant le débit et la température du fluide de chauffage dans une soupape de réglage, qui est associée au corps chauffant.

6. Procédé selon la revendication 5, **caractérisé en ce que** l'on mesure la grandeur représentant le débit sous la forme d'une différence de pression à l'intérieur de la soupape de réglage.

7. Procédé selon la revendication 5, **caractérisé en ce que** l'on mesure la grandeur représentant le débit sous la forme d'un gradient de température à l'intérieur de la soupape de réglage au moyen de capteurs de température.

8. Procédé selon la revendication 7, **caractérisé en ce que** l'on mesure le gradient de température le long de l'axe longitudinal du poussoir de soupape ou dans la paroi extérieure de la soupape de réglage.

**9.** Procédé selon l'une quelconque des revendications précédentes, **caractérisé en ce que** la grandeur représentant le débit est fournie par la levée de soupape d'une soupape de réglage associée au corps chauffant, qui est soit mesurée soit prédéterminée par une commande/une régulation prioritaire.

**10.** Procédé selon la revendication 9, **caractérisé en ce que** l'on mesure la levée de soupape sous la forme de la résistance d'un potentiomètre, dont la résistance dépend de la levée de soupape.

**11.** Procédé selon la revendication 9, **caractérisé en ce que** l'on détermine la levée de soupape à partir de la température ambiante réelle mesurée et d'une valeur de consigne de la température ambiante réglée à la soupape.

**12.** Dispositif de détermination de la délivrance de chaleur à un corps chauffant, qui peut être intégré dans la conduite d'arrivée ou la conduite de retour d'un corps chauffant et qui présente des capteurs pour la détermination d'une grandeur représentant le débit, et qui présente aussi un capteur de température pour la détermination de la température du fluide de chauffage en écoulement et une unité d'exploitation pour le calcul de la quantité de chaleur délivrée au corps chauffant associé, **caractérisé en ce que** la quantité de chaleur peut être calculée, au moyen de l'unité d'exploitation, à l'aide d'au moins la grandeur représentant le débit, d'une température mesurée du fluide de chauffage ainsi que d'un degré de refroidissement prédéterminé du fluide de chauffage entre le côté d'arrivée et le côté de retour et une température ambiante admise ou mesurée.

**13.** Dispositif selon la revendication 12, **caractérisé en ce qu'**il est réalisé sous la forme d'une soupape de réglage (1).

**14.** Dispositif selon l'une quelconque des revendications précédentes 12 ou 13, **caractérisé en ce qu'**il comprend un dispositif de mesure de pression (4, 5, 7), en particulier un dispositif de mesure de pression dynamique ou de différence de pression, pour la détermination d'une grandeur représentant le débit.

**15.** Dispositif selon la revendication 14, **caractérisé en ce que** le dispositif de mesure de pression est intégré dans le plateau de soupape (2).

**16.** Dispositif selon l'une quelconque des revendications précédentes 12 à 15, **caractérisé en ce qu'**il comprend un dispositif de mesure de température comportant au moins deux capteurs de température pour la détermination d'une grandeur représentant le débit, dans lequel un gradient de température entre au moins deux points de mesure peut être détecté au moyen des capteurs de température, en particulier le long de l'axe longitudinal du poussoir de soupape ou à l'intérieur d'une paroi extérieure du corps de soupape / du dispositif.

**17.** Dispositif selon l'une quelconque des revendications précédentes 12 à 16, **caractérisé en ce qu'**il comprend un dispositif de mesure pour la détermination de la levée de soupape comme grandeur représentant le débit.

**18.** Dispositif selon l'une quelconque des revendications précédentes 12 à 17, **caractérisé en ce qu'**une valeur de réglage pour la levée de soupape peut être prédéterminée comme grandeur représentant le débit aux capteurs pour la détermination d'une grandeur représentant le débit par une commande de chauffage prioritaire.

**Abkühlungsgrad in Abhängigkeit v. Durchfluss u. Vorlauf-Übertemperatur**

Fig. 1

EP 2 068 138 B1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3521188 A1
- DE 102005061107 A1
- DE 4122848 A1
- DE 3312140 A1